# EUROPEAN PATENT SPECIFICATION

(11) **EP 1 169 101 B1**
(45) Date of publication and mention of the grant of the patent: **10.01.2007**
(21) Application number: 00915487.3
(22) Date of filing: 11.04.2000
(51) Int. Cl.: A63F 13/12

(54) **ENTERTAINMENT SYSTEM, DATA COMMUNICATION NETWORK SYSTEM, ENTERTAINMENT APPARATUS, AND PORTABLE INFORMATION COMMUNICATION TERMINAL**
UNTERHALTUNGSSYSTEM, DATENKOMMUNIKATIONNETZWERKSYSTEM, UNTERHALTUNGSGERÄT UND TRAGBARER INFORMATIONSKOMMUNIKATIONSTERMINAL
SYSTEME DE DIVERTISSEMENT, SYSTEME RESEAU DE COMMUNICATION DE DONNEES, APPAREIL DE DIVERTISSEMENT ET TERMINAL DE COMMUNICATION D'INFORMATIONS PORTABLE

(30) Priority: 14.04.1999 JP 10670699
(43) Date of publication of application: 09.01.2002
(73) Proprietor: Sony Computer Entertainment Inc., Tokyo 107-0052 (JP)
(72) Inventor: CHATANI, Masayuki, Minato-ku, Tokyo 107-0052 (JP)
(74) Representative: Turner, James Arthur
(86) International application number: PCT/JP2000/002352
(87) International publication number: WO 2000/061252

(56) References cited:
- US-A- 5 051 822
- US-A- 5 526 035
- US-A- 5 668 591
- US-A- 5 795 228

## Description

### Technical Field

The present invention relates to an entertainment system which allows the user of a portable information communication terminal capable of receiving wireless signals using a wireless paging system or pager to obtain desired information based on received wireless signals, a data communication network system, an entertainment apparatus, and a portable information communication terminal.

### Background Art

Portable information communication terminals (also referred to as PDA "Personal Digital Assistant") having a flat display unit such as a liquid crystal display (LCD) unit, e.g., personal computers, electronic notebooks, portable telephone sets, PHS terminals, pagers, etc. have been in widespread usage.

Entertainment apparatus for downloading programs from mass-storage mediums such as CD-ROMs to play games or playing back music pieces in CDs are also gaining growing popularity.

There have also been put to use portable game machines that are detachably connectable to entertainment apparatus.

The portable game machines basically have a rewritable memory such as a flash memory and a CPU (Central Processing Unit). When a portable game machine is connected to an entertainment apparatus, a program is downloaded from the entertainment apparatus into the portable game machine.

After the program is downloaded, the portable game machine is disconnected from the entertainment apparatus, and can execute a game or the like based on the program downloaded in the memory.

For example, US-A-5 795 228 discloses an entertainment system which features pre-recorded scenes, live video and computer graphics in an interactive environment. A personal interaction device (PID) can wirelessly communicate with a personal computer (PC) to enable a user to interact with the interactive environment.

It is an object of the present invention to provide a data communication network system according to claim 3, using an entertainment system, according to claim 1, and a portable information communication terminal, according to claim 13, to create new functions. A method of communicating data over a data communication network is also provided, claim 5.

Another object of the present invention is to provide an entertainment system which is capable of increasing the convenience of a portable information communication terminal and an entertainment apparatus, a data communication network system using such an entertainment system, an entertainment apparatus, and a portable information communication terminal.

### Disclosure of Invention

According to the present invention, when an identification code and a service request are transmitted from a master unit to which a portable information communication terminal with a wireless reception function is connected, via a communication network to a computer system, the computer system transmits a service corresponding to the service request as a wireless signal to the portable information communication terminal. Therefore, the portable information communication terminal and the master unit can receive the service corresponding to the service request.

The computer system may transmit the identification code together with the service corresponding to the service request, so that only the portable information communication terminal and the master unit whose identification codes agree with the transmitted identification code can receive the service corresponding to the service request.

According to the present invention, furthermore, when an identification code and a service request are transmitted from an entertainment apparatus via a bidirectional communication network to a computer system having a server function, a portable information communication terminal can receive a service corresponding to the service request via a unidirectional communication network from another computer system having a data processing function and/or a database searching function. The first- and second-mentioned computer systems may be one computer system.

If the service request comprises a news distribution reference, then the portable information communication terminal can receive news based on the news distribution reference.

If the service request comprises a command for an online banking transaction, then the portable information communication terminal can receive information representing the processed transaction.

If the service request comprises data transmitted for purchasing an electronic image online, then the portable information communication terminal can receive the electronic image with an electronic watermark (digital watermark) added thereto.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a schematic view showing a data communication network system according to the present invention, which incorporates an entertainment system according to the present invention;
FIG. 2 is a block diagram of the data communication network system shown in FIG. 1;
FIG. 3 is a plan view of a portable information communication terminal;
FIG. 4 is a perspective view of the portable information communication terminal;
FIG. 5 is a perspective view of the portable information communication terminal with a lid being open;
FIG. 6 is a perspective view of the entertainment system;
FIG. 7 is a block diagram of the portable information communication terminal;
FIG. 8 is a block diagram of an entertainment apparatus;
FIG. 9 is a logic diagram showing the logic relationship between the entertainment apparatus and the portable information communication terminal connected thereto;
FIG. 10 is a block diagram of a selective news distribution system as an example of the data communication network system;
FIG. 11 is a flowchart of an operation sequence of the selective news distribution system shown in FIG. 10;
FIG. 12 is a block diagram of an online banking system as another example of the data communication network system;
FIG. 13 is a flowchart of an operation sequence of the online banking system shown in FIG. 12;
FIG. 14 is a block diagram of an electronic image sales system as another example of the data communication network system; and
FIG. 15 is a flowchart of an operation sequence of the electronic image sales system shown in FIG. 14.

### Best Mode for Carrying Out the Invention

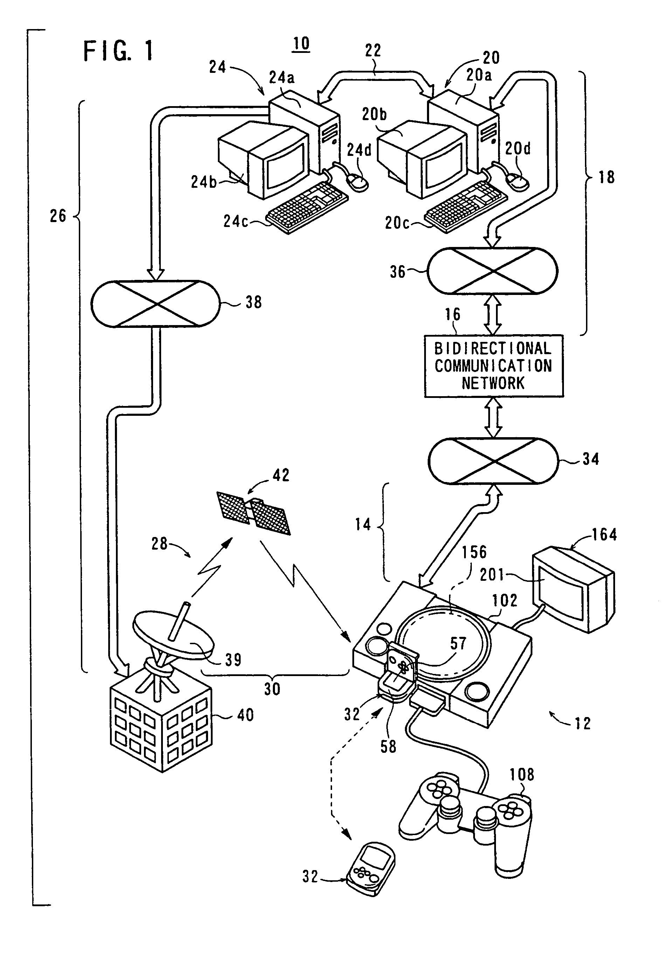

FIG. 1 schematically shows a data communication network system 10 according to the present invention, which incorporates an entertainment system 12 according to the present invention.

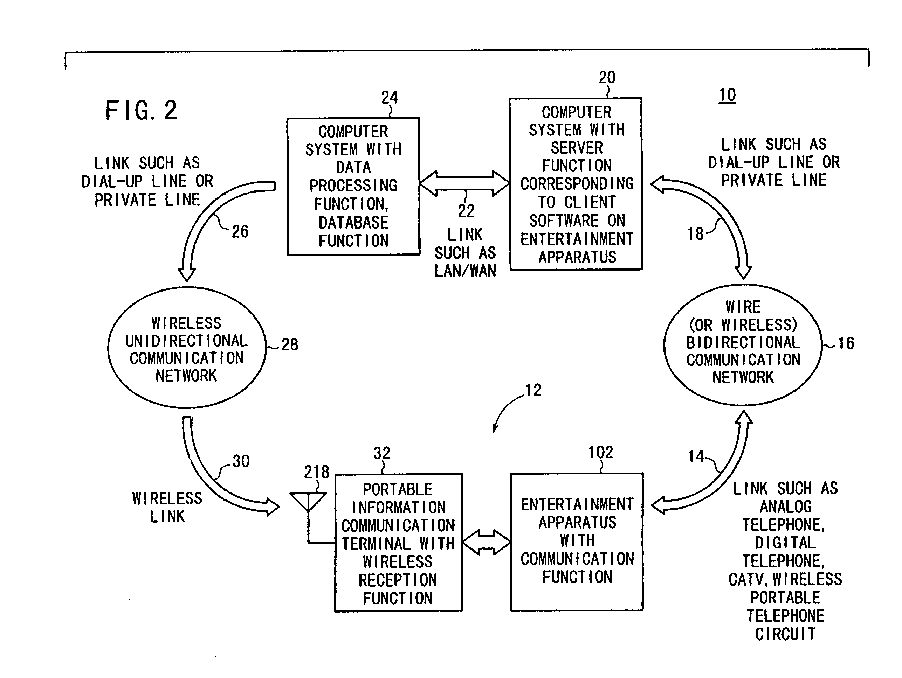

FIG. 2 shows in block form the data communication network system 10 illustrated in FIG. 1.

As shown in FIGS. 1 and 2, the data communication network system 10 basically comprises the entertainment system 12 for enjoying games, etc., a wire and/or wireless bidirectional communication network 16 connected to an entertainment apparatus (main unit) 102 of the entertainment system 12 by a link 14, a computer system 20 having a server function and connected to the bidirectional communication network 16 by a link 18, a computer system 24 having a data processing function and a database function and connected to the computer system 20 by a link 22, a wireless unidirectional communication network 28 connected to the computer system 24 by a link 26, and a portable information communication terminal 32 connected to the wireless unidirectional communication network 28 by a link 30. The portable information communication terminal 32 is detachably connectable to the entertainment apparatus 102.

The link 14 between the entertainment apparatus 102, which has a communication function, and the bidirectional communication network 16 may be a circuit 34 of an analog telephone terminal, a digital telephone terminal, a CATV (Cable Television) terminal, a wireless portable telephone terminal, a PHS (Personal Handy-phone System) terminal, etc.

The bidirectional communication network 16 may be a network of a local telephone company, a CATV company, a cellular telephone company, etc., the Internet connected to an internet service provider (ISP), or the like.

The link 18 between the bidirectional communication network 16 and the computer system 20 may be a dial-up line which can be connected by a telephone circuit 36 only when it is dialed, or a private line.

The link 22 between the computer system 20 and the computer system 24 may be a LAN (Local Area Network) or a WAN (Wide Area Network) which are communication circuits capable of high-speed communication.

The computer systems 20, 24 comprise respective main computers 20a, 24a each having a mass-storage medium, respective display monitors 20b, 24b, and respective keyboards 20c, 24c and mice 20d, 24d as input means. The computer system 20 with the server function instructs the computer system 24 to perform a certain processing operation when supplied with an identification (ID) code and a service request from the entertainment system 12 as a client.

The computer systems 20, 24 may be combined into an integral computer system 24 having a data processing function and/or a database function.

Based on instructions from the computer system 20, the computer system 24 searches its own database or a database of another computer (not shown) via the link 22, and performs desired data processing.

The link 26 between the computer system 24 and the wireless unidirectional communication network 28 may be a dial-up line which can be connected by a telephone circuit 38 only when it is dialed, or a private line.

The wireless unidirectional communication network 28 may comprise a wireless paging system or pager, a service provider network, a TV data broadcasting network, a satellite data broadcasting network, or CS (Communication Satellite) telephone data broadcasting network.

In FIG. 1, a satellite data broadcasting network is used as the wireless unidirectional communication network 28, and comprises a transmitting station 40 having a transmission antenna 39, and a communication satellite 42 having an antenna for reflecting wireless waves transmitted from the transmission antenna 39 to the ground.

The link 30 between the wireless unidirectional communication network 28 and the portable information communication terminal 32 comprises a wireless link such as a microwave link or the like.

As shown in FIG. 1, the entertainment system 12 has the entertainment apparatus 102 which has a communication function for reading and executing various programs stored in an optical disk 156 that is a detachable storage medium (mass-storage medium) such as a CD-ROM or a DVD (Digital Video Disk) and for connection to the bidirectional communication network 16 via the link 14. The entertainment apparatus 102 can also serve as a client, as described later on.

The entertainment system 12 also has the portable information communication terminal 32 which is detachably connected to the entertainment apparatus 102, capable of receiving wireless signals from the wireless unidirectional communication network 28 via the link 30, and also capable of sending information to and receiving information from at least the entertainment apparatus 102 via a connector or wireless communications such as infrared communications.

The entertainment system 12 further has a manual controller 108 connected to the entertainment apparatus 102 by a connector and a display monitor 164 as a display unit connected to the entertainment apparatus 102. The display monitor 64 may comprise a television receiver. The entertainment apparatus 102, the manual controller 108, and the display monitor 164 may be combined into an integral entertainment system.

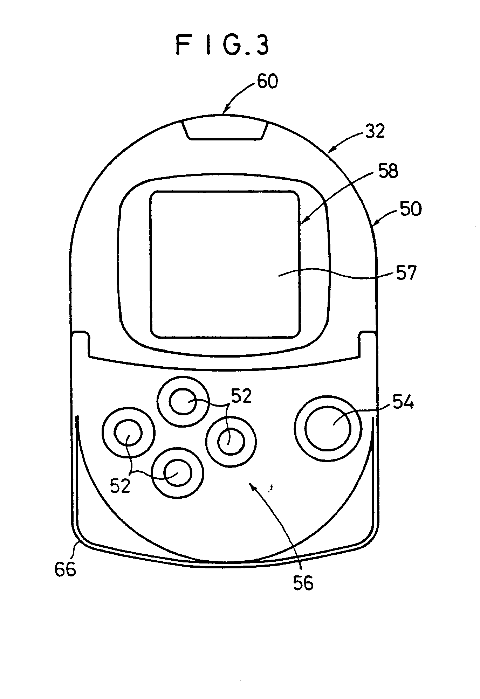

Based on received information from an antenna 218, the portable information communication terminal 32 can expanded compressed data that has been received and display characters and images (still and moving images) represented by the expanded data on a display screen 57 (see FIGS. 3 through 5) of a display unit 58. Such characters and images can also be displayed on a display screen 201 of the display monitor 164 via the entertainment apparatus 102.

FIGS. 3 through 5 show the portable information communication terminal 32. As shown in FIGS. 3 through 5, the portable information communication terminal 32 has a housing 50 which supports a manual control pad 56 having a plurality of direction buttons 52 and a decision button 54 for entering events and making various selections, a display unit 58 comprising a liquid crystal display (LCD) unit or the like which has a display screen 57, a window 60 for wireless communication with another portable information communication terminal 32 or the entertainment apparatus 102 via infrared radiation or the like, and a wireless antenna (reception antenna) 218 (see FIG. 2) for receiving wireless signals from the communication satellite 42.

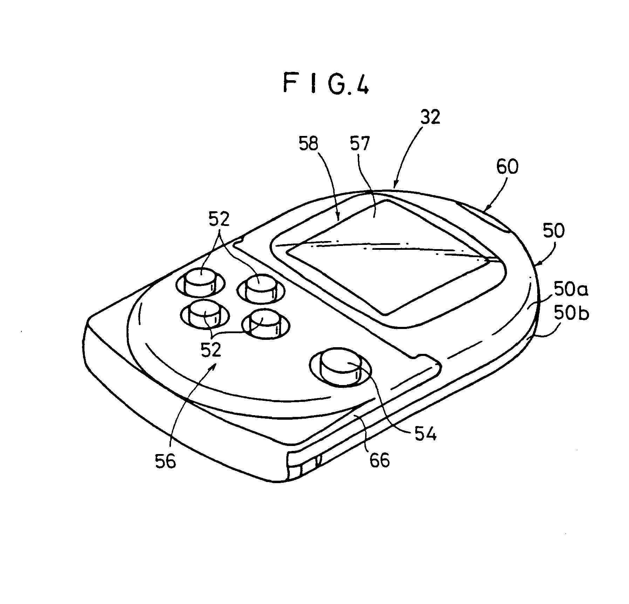

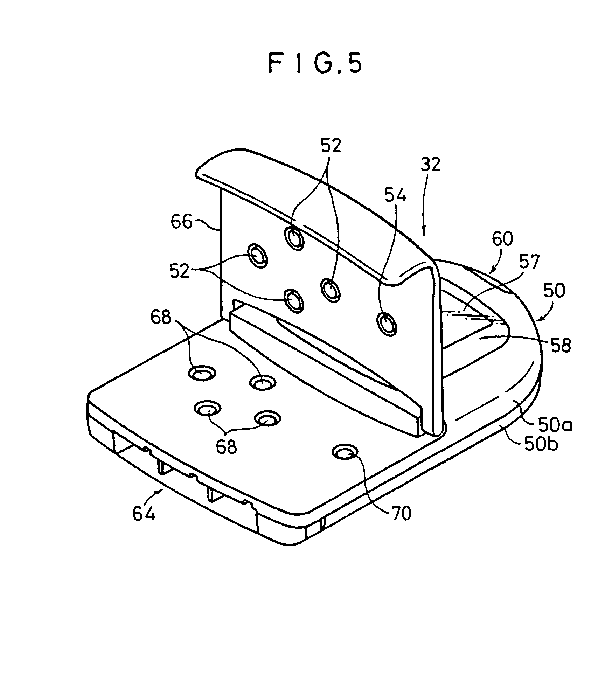

As shown in FIGS. 4 and 5, the housing 50 comprises an upper shell 50a and a lower shell 50b, and houses a board which supports a CPU, a memory device, etc. thereon.

The manual control pad 56 occupies a substantially half area of the upper shell 50a, and is positioned remotely from the window 60. The manual control pad 56 comprises a substantially square lid 66 that is angularly movably supported on the housing 50 and supports thereon the direction buttons 52 and the decision button 54, and switch pressers 68, 70 positioned in an area of the housing 50 which can be opened and closed by the lid 66. The housing 50 has a connector 64 at an end of the manual control pad 56.

The direction buttons 52 and the decision button 54 extend through the lid 66. The direction buttons 52 and the decision button 54 are supported on the lid 66 for movement into and out of the upper surface of the lid 66. The switch pressers 68, 70 have respective pressing elements supported on the housing 50 for movement into and out of the upper surface of the housing 50. When one of the pressing elements is pressed from above, it presses a corresponding pressure switch such as a diaphragm switch, for example, mounted on the board in the housing 50.

With the lid 66 closed, the switch pressers 68, 70 are held in vertical alignment with the direction buttons 52 and the decision button 54, respectively. Therefore, while the lid 66 is being closed over the housing 50, when the direction buttons 52 and the decision button 54 are pressed from above into the upper surface of the lid 66, the direction buttons 52 and the decision button 54 cause the pressing elements of the corresponding switch pressers 68, 70 to press corresponding pressure switches in the housing 50.

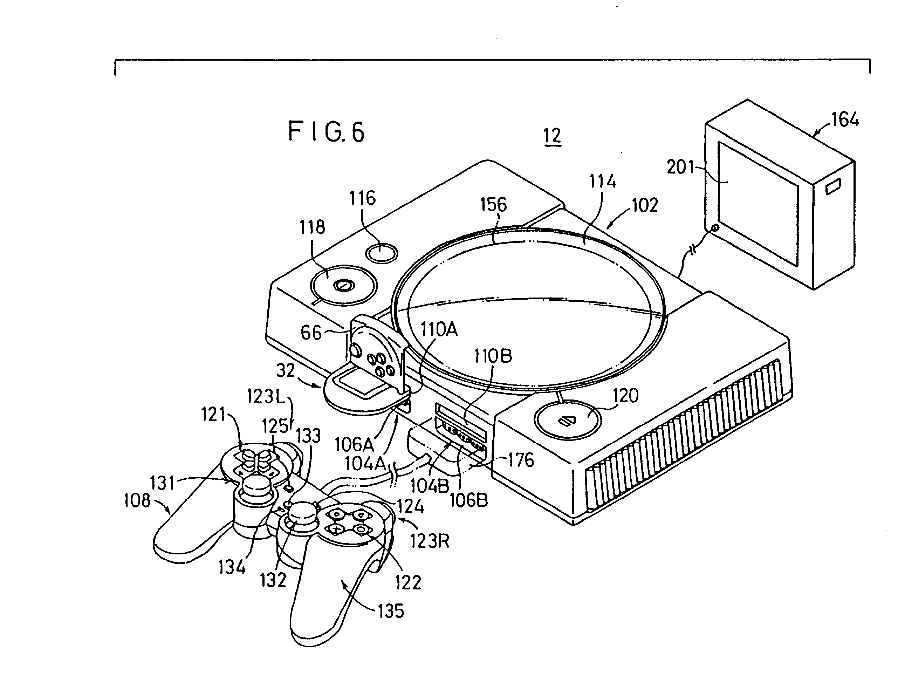

FIG. 6 shows in perspective the entertainment system 12 in use with the portable information communication terminal 32 connected thereto (see FIG. 1).

As shown in FIG. 6, the entertainment system 12 includes an entertainment apparatus 102 which serves as a master unit for the portable information communication terminal 32, the manual controller 108 detachably inserted in one of lower insertion units 106A, 106B in two slots 104A, 104B defined in a front wall of the entertainment apparatus 102, the portable information communication terminal 32 detachably inserted in one of upper insertion units 110A, 110B in the slots 104A, 104B, and the display monitor 164 such as a television receiver which is supplied with video and audio output signals from the entertainment apparatus 102. Although not shown, a memory card containing a flash memory or the like for recording interim data of a game that is being played may be inserted into the upper insertion units 110A, 110B. The portable information communication terminal 32 also functions as a memory card.

The entertainment apparatus 102 has a disk loading unit 114 for loading an optical disk 156 as a storage medium such as a DVD, a CD-ROM, or the like, a reset switch 116, a power supply switch 118, a disk control switch 120 for controlling the loading of the optical disk 156, and the two slots 104A, 104B.

The manual controller 108, which is connected to the entertainment apparatus 102, has first and second control pads 121, 122, an L button 123L, an R button 123R, a start button 124, and a selection button 125. The manual controller 108 also has control pads 131, 132 for making analog control actions, a mode selection switch 133 for selecting control modes of the control pads 131, 132, and an indicator 134 for indicating a selected control mode. The above elements of the manual controller 108, except for the indicator 134, are collectively referred to as a control key assembly 135 for an easier understanding.

The entertainment apparatus 102 can read a program recorded in the optical disk 156 with the disk loading unit 114, and execute a game, for example, based on the program depending on commands supplied from the user, e.g., the game player, via the manual controller 108, with the assistance of images displayed on and sounds produced by the display monitor 164. The execution of the game mainly represents controlling the progress of the game and the display of images and the generation of sounds.

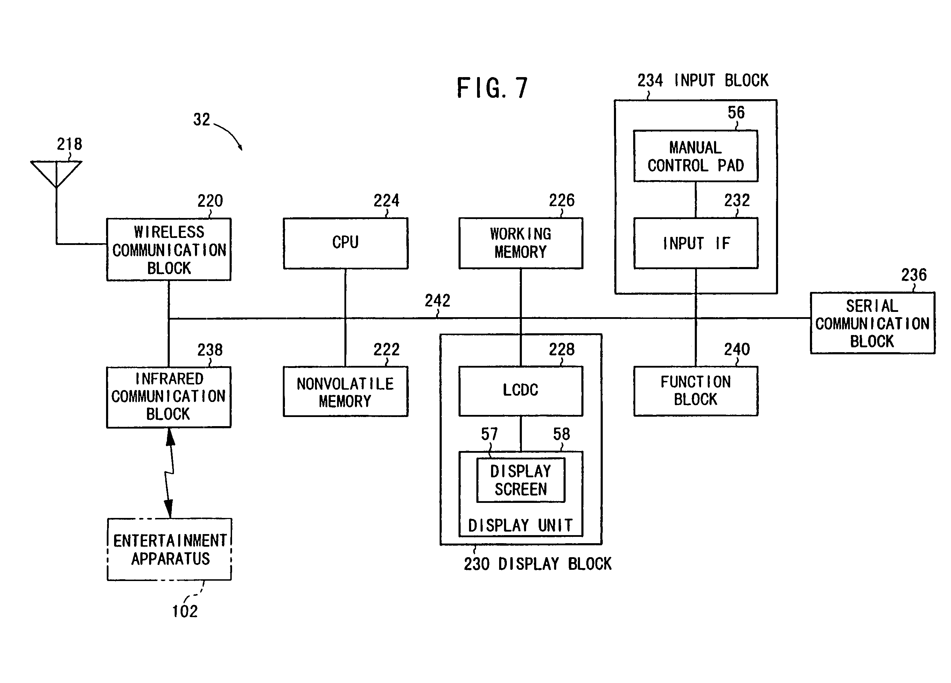

FIG. 7 shows in block form an electric circuit of the portable information communication terminal 32. As shown in FIG. 7, the portable information communication terminal 32 basically functions as a computer, and has a wireless communication block 220 as a wireless signal receiver for receiving wireless signals such as microwave signals or the like transmitted from the wireless unidirectional network system 28 via the antenna 218.

The portable information communication terminal 32 also has a nonvolatile memory 222 comprising a flash memory or the like as a storage medium compatible with a memory card.

The portable information communication terminal 32 also has a CPU 224 for executing a program and data stored in the nonvolatile memory 222 on the portable information communication terminal 32, and a working memory 226.

The portable information communication terminal 32 further includes a display block 230 comprising a liquid crystal display controller (LCDC) 228 which also functions as a display controller together with the CPU 224 and the display unit 58 having the display screen 57, an input block 234 comprising the manual controller 56 and an input interface (input IF) 232 for the manual controller 56, a serial communication block 236 for effecting serial communications with the entertainment apparatus 102 via a physical connector, an infrared communication block 238 for effecting infrared communications with another portable information communication terminal 32 or the entertainment apparatus 102, and a function block 240 for performing other functions than the above blocks, which may include a power supply function, for example. These blocks 220, 238, 224, 222, 226, 230, 234, 240, 236 are connected to each other by a bus 242. The infrared communication block 238 also functions as a wireless signal receiver.

The nonvolatile memory 222 stores identification codes of information that can be received, as data. When data is received by the wireless communication block 220, the portable information communication terminal 32 compares the identification code contained in the header of the received data with the stored identification codes, reads the received data only when the compared identification codes agree with each other, and stores the read data via the working memory 226 into the nonvolatile memory 222. The nonvolatile memory 222 also stores data relative to an individual PDA identification code (individual ID, hereinafter referred to as "individual PDA ID"), e.g., a production serial number or a password assigned to the portable information communication terminal 32 when it is purchased, which serves to identify the portable information communication terminal 32 itself. The nonvolatile memory 222 also stores data relative to a user identification code (user ID, hereinafter referred to as "PDA user ID") that is entered by the user of the portable information communication terminal 32 via the manual control pad 56 to identify the user.

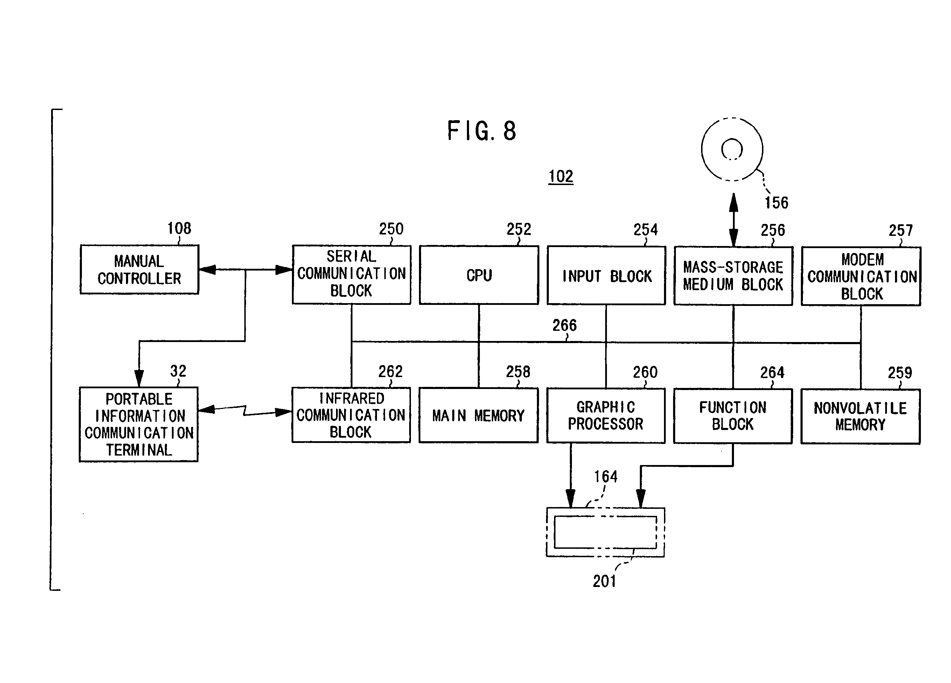

FIG. 8 shows in block form an electric circuit of the entertainment apparatus 102. As shown in FIG. 8, the entertainment apparatus 102 has a serial communication block 250, an infrared communication block 262, a CPU 252, an input block 254, a mass-storage medium block 256, a main memory 258, a nonvolatile memory 259, a graphic processor 260, a modem communication block 257, and a function block 264. These blocks are connected to each other by a bus 266.

The input block 254 functions as a manual input controller (not shown) for allowing the user to enter various items of information into the entertainment apparatus 102.

The main memory 258 serves as a memory means for storing various data. For example, the main memory 258 stores application software, data transmitted from the portable information communication terminal 32 and the manual controller 108 via the serial communication block 250, and data transmitted from the portable information communication terminal 32 via the infrared communication block 262.

The nonvolatile memory 259 stores data relative to an individual identification code (individual ID, hereinafter referred to as "individual EMA (entertainment apparatus) ID"), e.g., a production serial number which serves to identify the entertainment apparatus 102 itself. The nonvolatile memory 259 also stores data relative to a user identification code (user ID, hereinafter referred to as "EMA user ID") that is entered by the user of entertainment apparatus 102 via the manual controller 108 to identify the user.

The graphic processor 260 serves as a processor for processing image data. For example, the graphic processor 260 performs graphic processing, e.g., polygon graphic processing, for images to be displayed on the display screen 201 of the display monitor 164.

The mass-storage medium block 256 serves as a unit for reading various programs or data recorded in the optical disk 156, as a mass-storage package medium.

The serial communication block 250 has a function to effect serial communications with an external device. The serial communication block 250 is electrically connectable to the serial communication block 236 of the portable information communication terminal 32 and a serial communication block of the manual controller 108 for data communications with the portable information communication terminal 32 and the manual controller 108.

The modem communication block 257, which has a modem as a signal converter, converts data generated by the portable information communication terminal 32 or the entertainment apparatus 102 into an analog signal, transmits the analog signal to the circuit 34 of the link 14, converts a data signal or an analog signal transmitted from the computer system 20 or the bidirectional communication network 16 into a data signal, and stores the data signal into the main memory 258. If the link 14 comprises a digital circuit, then the modem communication block 257 may be replaced with a DSU communication block having a DSU (Digital Service Unit) as a signal converter. The entertainment apparatus 102 may have both the modem communication block 257 and the DSU communication block.

The function block 264 is arranged to perform other functions than the above blocks, and may comprise a power supply block or a connection block for connection to the memory card as a storage medium and the portable information communication terminal 32, for example.

The CPU 252 functions to control the above blocks 257, 260, 262, 258, 254, 256, 264.

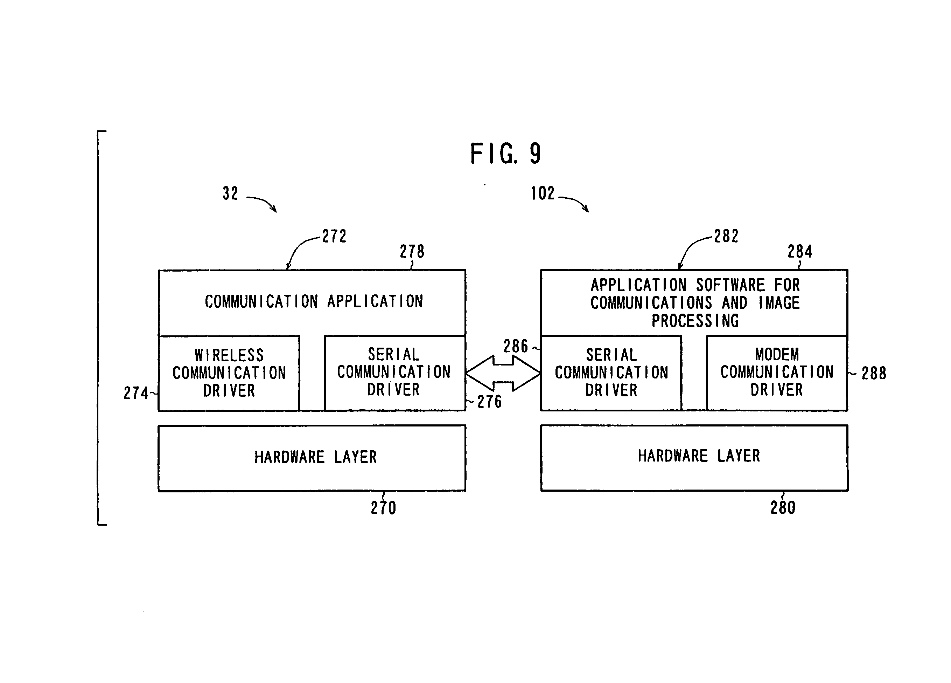

FIG. 9 shows the logic relationship between the entertainment apparatus 102 and the portable information communication terminal 32 connected thereto. As shown in FIG. 9, the portable information communication terminal 32 comprises a hardware layer 270 (including the antenna 218) for processing data received via the antenna 218 (see FIG. 7), and a software layer 272 for performing communications in the hardware layer 270, the software layer 272 comprising a wireless communication driver 274, a serial communication driver 276, and a communication application 278.

As shown in FIG. 7, the hardware layer 270 of the portable information communication terminal 32 comprises the blocks including the CPU 224 and the wireless communication block 220 which are connected to the bus 178. The wireless communication block 220 receives data with the wireless communication driver 274 which comprises a program. The CPU 224 has a function to control the above blocks, e.g., to control the blocks according to various programs including the communication application 278 of the software layer 272.

As shown in FIG. 9, the entertainment apparatus 102 comprises a hardware layer 280 and a software layer 282 comprising application software 284 for controlling the hardware layer 280 and performing communications and image processing, and a serial communication driver 286 and a wireless communication driver 288 included in the application software 284.

As shown in FIG. 8, the hardware layer 280 of the entertainment apparatus 102 comprises the blocks including the CPU 252, the serial communication block 250, the modem communication block 257 which are connected to the bus 266. The serial communication block 250 is controlled for its communications by the serial communication driver 286. The modem communication block 257 is controlled for its communications by the wireless communication driver (modem communication driver) 288.

The entertainment apparatus 102 and the portable information communication terminal 32 are physically connected to each other between the connector 64 (see FIG. 5) of the portable information communication terminal 32 and the connector (not shown) of the upper insertion unit 110A of the entertainment apparatus 102. Of course, the entertainment apparatus 102 and the portable information communication terminal 32 can electrically be connected to each other in a wireless fashion between their infrared communication blocks 262, 238.

Operation of the data communication network system 10 will be described below.

Overall operation of the data communication network system 10 will first be described below. When the entertainment apparatus 102 and the portable information communication terminal 32 are electrically connected to each other, e.g., when the portable information communication terminal 32 is connected to the entertainment apparatus 102 as shown in FIG. 1 or when the portable information communication terminal 32 is not physically connected to, but is capable of infrared communication with, the entertainment apparatus 102, the entertainment apparatus 102 reads the inherent individual identification code (individual PDA ID) stored in the nonvolatile memory 222 from the portable information communication terminal 32. The entertainment apparatus 102 transmits the individual PDA ID of the portable information communication terminal 32 and a service request for a service to be received to the computer system 20 with the server function via the link 14, the bidirectional communication network 16, and the link 18.

The computer system 20 sends commands corresponding to the individual PDA ID and the service request received from the entertainment system 12 via the link 22 such as a LAN or the like to the computer system 24 having the database.

The computer system 24 searches the database to extract information represented by the service request, or processes data depending on the service request, compresses the extracted information or the processes data into compressed data, and sends a frame of compressed data (data transmission unit) with the individual PDA ID in its header (address part), via the wireless link 30 to the portable information communication terminal 32. Having received the frame, the portable information communication terminal 32 compares its own individual PDA ID with the received individual PDA ID, and can expand and reproduced the received data (compressed data) only when the compared individual PDA IDs agree with each other.

The expanded data can also be reproduced on the display monitor 164 by the entertainment apparatus 102 which is connected to the portable information communication terminal 32.

Therefore, the entertainment system 12 which includes the portable information communication terminal 32 can receive the desired service based on the service request via the network. The entertainment system 12 can receive the desired service on a real-time basis.

First, second, and third embodiments of the present invention will be described below.

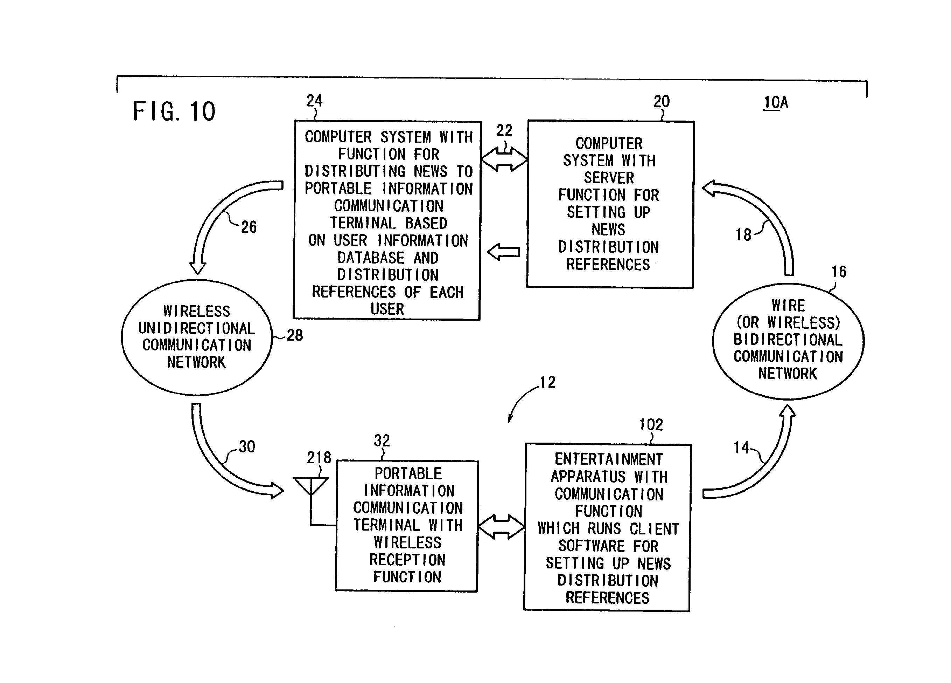

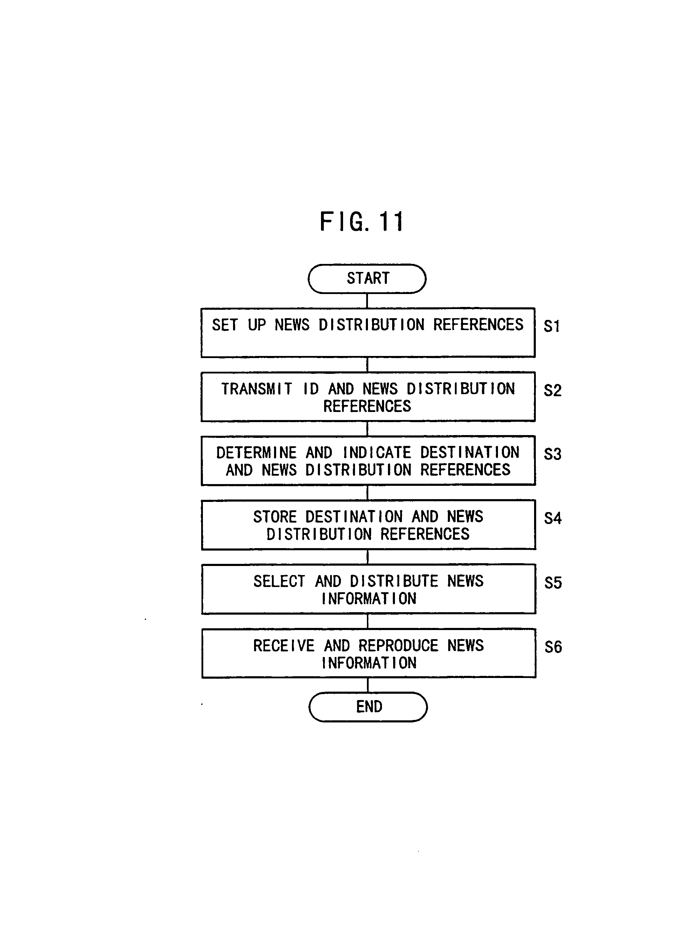

FIG. 10 shows in block form a selective news distribution system 10A as an example of the data communication network system which includes the entertainment system 12 comprising the portable information communication terminal 32 and the entertainment apparatus 102. FIG. 11 shows a flowchart of an operation sequence of the selective news distribution system 10A shown in FIG. 10.

The entertainment apparatus 102 runs client software for setting up news distribution references which has been downloaded from the optical disk 156 via the mass-storage medium block 256. In step S1, the user of the entertainment apparatus 102 starts the client software, and sets up news distribution references including the type (category) of news information which the user wants to be distributed, the maximum number of pieces of news information to be transmitted at one time, and the frequency with which news information is to be transmitted per day. The client software for setting up news distribution references can be downloaded from the computer system 20 via the link 18, the bidirectional communication network 16, and the link 14 into the main memory 258. The client software stored in the main memory 258 may be loaded into the nonvolatile memory 259.

In step S2, the entertainment system 12 transmits the news distribution references relative to a desired service request, together with the individual PDA ID read from the nonvolatile memory 222 of the portable information communication terminal 32, via the link 14, the bidirectional communication network 16, and the link 18 to the computer system 20. In addition to the individual PDA ID read from the nonvolatile memory 222, other identification codes including the EMA user ID of the entertainment apparatus 102 and/or the PDA user ID of the portable information communication terminal 32 is also transmitted to the computer system 20.

In the data communication network system 10 (10A) which transmits the individual PDA ID as an indispensable identification code, the portable information communication terminal 32 can be considered as a medium similar to a transaction card for use in an online banking system (online bank system).

Upon reception of the individual PDA ID and the news distribution reference information, the computer system 20 determines a destination portable information communication terminal 32 and news distribution references based on the individual PDA ID and the news distribution reference information which have been transmitted, and transmits them as a command relative to the desired service request via the link 22 to the computer system 24 which has a database of user information and a function to distribute news to the portable information communication terminal 32 based on news distribution references for users in step S3. The computer system 20 sends an acknowledgment for the command via the link 18, the bidirectional communication network 16, and the link 14 to the entertainment apparatus 102, whereupon the transmission path between the entertainment apparatus 102 and the computer system 20, based on the links 14, 18 and the bidirectional communication network 16, is disconnected.

In step S4, the computer system 24 stores the individual PDA ID of the portable information communication terminal 32 and the news distribution references in a memory for distribution contents (news distribution references) and a memory for destinations in its own database.

The computer system 24 has various items of news information that is added and updated from time to time in its database. The various items of news information are classified under the categories of society, economy, industry, sports, etc.

In step S5, based on the command from the computer system 20, the computer system 24 selects news information matching the news distribution references from the database, compresses the selected news information into compressed data, and distributes, to the portable information communication terminal 32 designated as a destination, the individual PDA ID of the destination and a frame of compressed data with the individual PDA ID in its header and the compressed data in its data part.

The news information is distributed repeatedly intermittently via the link 26, the wireless unidirectional communication network 28, and the wireless link 30 to a plurality of portable information communication terminals 32. However, in step S6, the news information can be reproduced by only the portable information communication terminal 32, among those plural portable information communication terminals 32, which has the individual PDA ID, stored in the nonvolatile memory 222, that agrees with the individual PDA ID in the header of the transmitted frame. The compressed data can be decoded, i.e., expanded, by a decoder in the wireless communication block 220 or the CPU 224. The CPU 224 determines whether individual PDA ID of the portable information communication terminal 32 agrees with the individual PDA ID in the header of the transmitted frame or not.

The news information is reproduced on the display screen 57 of the display unit 58 of the portable information communication terminal 32, and also on the display screen 201 of the display monitor 164 of the entertainment apparatus 102 to which the portable information communication terminal 32 is connected. When the news information is reproduced on the display screen 57 or the display screen 201. sound can also be reproduced in synchronism with the displayed image.

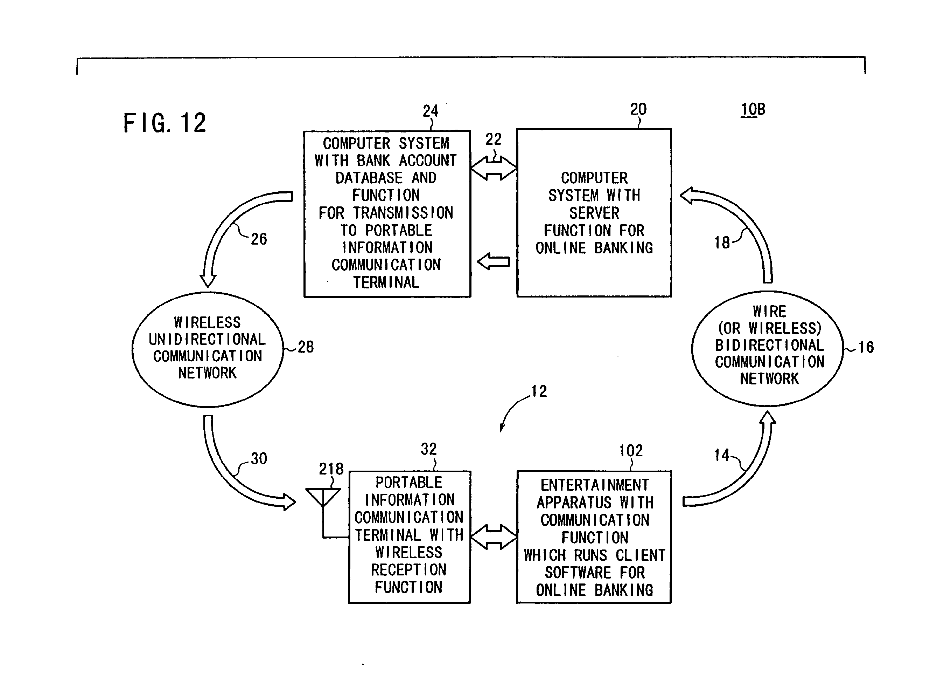

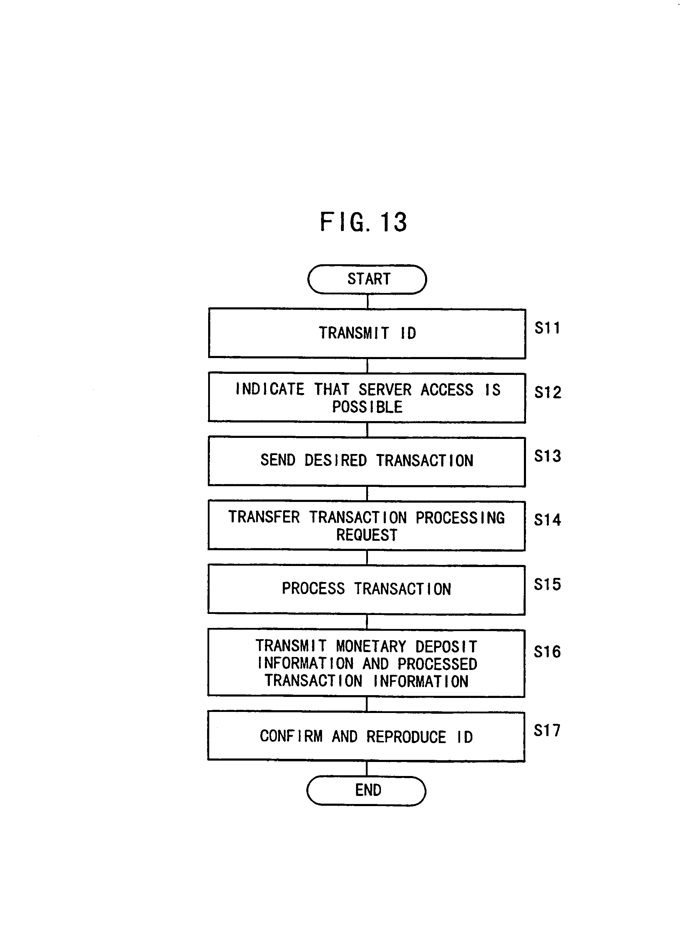

FIG. 12 shows in block form an online banking system 10B as another example of the data communication network system which includes the entertainment system 12 comprising the portable information communication terminal 32 and the entertainment apparatus 102. FIG. 13 shows a flowchart of an operation sequence of the online banking system 10B shown in FIG. 12.

The entertainment apparatus 102 runs client software for online banking which has been downloaded from the optical disk 156 via the mass-storage medium block 256. In step S11, the user of the entertainment apparatus 102 starts the client software, and transmits the individual PDA ID of the connected portable information communication terminal 32 via the link 14, the bidirectional communication network 16, and the link 18 to the computer system 20. The client software for online banking can be downloaded from the computer system 20 via the bidirectional communication network 16 into the entertainment apparatus 102.

In step S12, the computer system 20 decodes the transmitted individual PDA ID, which doubles as a security password. If the decoded individual PDA ID is the same as an individual PDA ID registered in the database of the computer system 20, then the computer system 20 indicates, to the entertainment apparatus 102 via the link 18, the bidirectional communication network 16, and the link 14, that a server access to online banking services can be gained.

In step S13, the user enters a desired one of various transactions, e.g., money transfer between accounts, balance checking, etc. offered by online banking services, via the manual controller 108, and the entertainment apparatus 102 transmits the entered transaction via the link 14, the bidirectional communication network 16, and the link 18 to the computer system 20.

In step S14, the computer system 20 transfers a command relative to the individual PDA ID and a transaction processing request to the computer system 24.

In step S15, the computer system 24 processes the transaction indicated by the transaction processing request with respect to a user's bank account number, stored in the database, corresponding to the individual PDA ID.

In step S16, if the computer system 24 confirms that there is a monetary deposit from an external source into a bank account number via an ATM (Automatic Teller Machine), then the computer system 24 searches for an individual PDA ID based on the account number for which the monetary deposit has been made. If the individual PDA ID based on the bank account number is the same as the individual PDA ID of the connected portable information communication terminal 32, then the computer system 24 generates a frame of data including the monetary deposit information and the processed transaction information in data part and the individual PDA ID as a password in its header, and transmits the frame via the link 26, the wireless unidirectional communication network 28, and the link 30 to the portable information communication terminal 32.

The individual PDA ID as a password can only be decoded by the portable information communication terminal 32 whose individual PDA ID is stored in the nonvolatile memory 222 in step S17. Therefore, the received data can be reproduced by the portable information communication terminal 32.

The user can confirm the processed transaction information and the bank account number information on the display screen 57 of the display unit 58 of the portable information communication terminal 32 and/or the display screen 201 of the display monitor 164 of the entertainment apparatus 102.

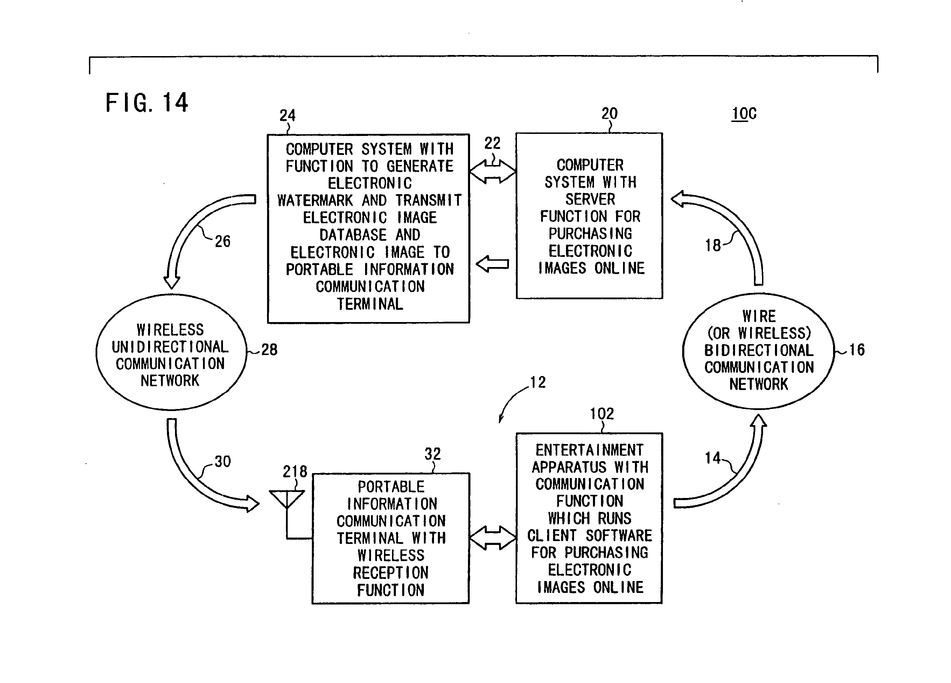

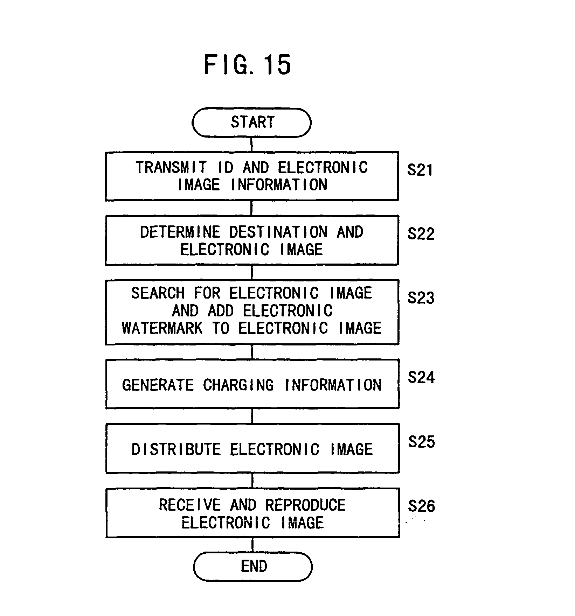

FIG. 14 shows in block form an electronic image sales system 10C as another example of the data communication network system which includes the entertainment system 12 comprising the portable information communication terminal 32 and the entertainment apparatus 102. FIG. 15 shows a flowchart of an operation sequence of the electronic image sales system 10C shown in FIG. 14.

The entertainment apparatus 102 runs client software for purchasing electronic images online which has been downloaded from the optical disk 156 via the mass-storage medium block 256 into the main memory 258. In step S21, the user of the entertainment apparatus 102 starts the client software, selects a desired electronic image to be purchased, and transmits information relative to the selected electronic image and the individual PDA ID of the connected portable information communication terminal 32 which is presently connected to the entertainment apparatus 102, via the link 14, the bidirectional communication network 16, and the link 18 to the computer system 20. The client software for purchasing electronic images online can be downloaded from the computer system 20 via the bidirectional communication network 16 into the entertainment apparatus 102.

In step S22, the computer system 20, which has a server function for purchasing electronic images online, determines a destination portable information communication terminal 32 and an electronic image based on the information relative to the selected electronic image and the individual PDA ID which have been transmitted, and transmits a desired service request command indicative of the information representative of the determined destination portable information communication terminal 32 and electronic image and a charge for the purchased electronic image, via the link 22 to the computer system 24. The computer system 24 has a function to generate an electronic watermark and transmit an electronic image database and an electronic image to the portable information communication terminal 32 and also a function to process charges.

The computer system 20 sends an acknowledgment for the command via the link 18, the bidirectional communication network 16, and the link 14 to the entertainment apparatus 102, whereupon the transmission path between the entertainment apparatus 102 and the computer system 20, based on the links 14, 18 and the bidirectional communication network 16, is cut off.

In step S23, the computer system 24 searches the database for the electronic image to be purchased, extracts the electronic image from the database, adds an electronic watermark to the extracted electronic image for preventing unauthorized duplication thereof, and generates compressed data of the electronic image. The electronic watermark is generated using, as a key, the user information represented by the individual PDA ID transmitted from the entertainment apparatus 102.

In step S24, the computer system 24 generates charging information for the generation and distribution of the electronic image.

In step S25, the computer system 24 distributes a frame of compressed data with the individual PDA ID of the destination in its header and the charging information to the portable information communication terminal 32 indicated as the destination.

The frame of compressed data and the charging information are distributed via the link 26, the wireless unidirectional communication network 28, and the wireless link 30 to a plurality of portable information communication terminals 32. However, in step S26, the frame of compressed data and the charging information can be reproduced by only the portable information communication terminal 32, among those plural portable information communication terminals 32, which has the individual PDA ID, stored in the nonvolatile memory 222, that agrees with the individual PDA ID in the header of the transmitted frame. The compressed data can be decoded, i.e., expanded, by a decoder in the wireless communication block 220 or the CPU 224. The CPU 224 determines whether individual PDA ID of the portable information communication terminal 32 agrees with the individual PDA ID in the header of the transmitted frame or not.

The electronic image is reproduced on the display screen 57 of the display unit 58 of the portable information communication terminal 32, and also on the display screen 201 of the display monitor 164 of the entertainment apparatus 102 to which the portable information communication terminal 32 is connected.

Electronic images can be distributed to the user intermittently or continuously as weekly periodically purchased images once the user gives a purchase instruction.

According to the present invention, as described above, when a desired service request is transmitted from the entertainment apparatus connected to the portable information communication terminal capable of wireless reception, via the bidirectional communication network to the computer system, the computer system effects processing depending on the transmitted service request, and a service indicated by the service request is distributed via the unidirectional communication network and provided to the user via the portable information communication terminal.

Therefore, the portable information communication terminal capable of wireless reception and the entertainment apparatus can complement each other to create various new functions.

Furthermore, it is possible to construct a data communication network system which is capable of increasing the convenience of a portable information communication terminal and an entertainment apparatus.

Although certain preferred embodiments of the present invention have been shown and described in detail, it should be understood that various changes and modifications may be made therein without departing from the scope of the appended claims.

## Claims

1. An entertainment system comprising:
a master unit (102) connected to a communication network (16); and
a portable information communication terminal (32) connected to the master unit (102) and capable of receiving a wireless signal from an external source via a wireless communication network operably connected to a computer system (20, 24) so as to form a network arrangement;
in which:
the master unit (102) reads the identification code (ID) from the portable information communication terminal (32); and the network arrangement is such that, when the identification code (ID) of the portable information communication terminal (32) and a service request are transmitted from the master unit (102) via the communication network (16) to the computer system (20, 24), the computer system (20, 24) transmits a service corresponding to the service request as a wireless signal to the portable information communication terminal (32);
the system **characterised in that**:
the wireless communication network (28) is unidirectional; and the portable information communication terminal (32) receives the wireless signal as the service corresponding to the service request from the wireless unidirectional communication network (28), not through the master unit (102).

2. An entertainment system according to claim 1, in which the computer system transmits the identification code, together with the service corresponding to the service request, as a wireless signal to the portable information communication terminal.

3. An entertainment system according to claim 1, in which:
the computer system (20, 24) sends the identification code (ID) and the service corresponding to the service request via a wireless link (30) comprising the wireless unidirectional communication network (28) to the portable information communication terminal (32); and
only the portable information communication terminal (32) that agrees with the identification code (ID) can obtain the service corresponding to the service request.

4. An entertainment system according to claim 1, in which the master unit (102) transmits a service request to the computer system (20, 24), together with the identification code (ID) for identifying the portable information communication terminal (32) to which the service corresponding to the service request should be sent.

5. A method of communicating data over a data communication network system, the system comprising an entertainment system having a master unit (102) connected to a communication network (16) and a portable information communication terminal (32) connected to the master unit (102) and capable of receiving a wireless signal from an external source via a wireless communication network (28); and
the method comprising the step of:
reading the identification code (ID) from the portable information communication terminal (32); and transmitting the identification code (ID) of the portable information communication terminal (32) and a service request from the master unit (102) via the communication network (16) to a computer system (20, 24) causing the computer system (20, 24) to transmit a service corresponding to a service request as a wireless signal to the portable information communication terminal (32);
in which the method is **characterised by** the steps of:
receiving the wireless signal at the portable information communication terminal (32) as the service corresponding to the service request from the wireless communication network (28), not through the master unit (102), the wireless communication network being unidirectional.

6. A method according to claim 5, comprising the step of:
using the computer system to transmit the identification code together with the service corresponding to the service request, as a wireless signal to the portable information communication terminal.

7. A method according to claim 5, comprising the step of:
using the computer system (20, 24) to send the identification code (ID) and the service corresponding to the service request via a wireless link (30) comprising the wireless unidirectional communication network (28) to the portable information communication terminal (32) so that only the portable information communication terminal (32) that agrees with the identification code (ID) can obtain the service corresponding to the service request.

8. A method according to claim 5, comprising the step of:
using the master unit (102) to transmit a service request to the computer system (20, 24), together with the identification code (ID) for identifying the portable information communication terminal (32) to which the service corresponding to the service request should be sent.

9. A data communication network system comprising:
an entertainment system having a master unit (102) connected to a communication network (16), and a portable information communication terminal (32) connected to the master unit and capable of receiving a wireless signal from an external source;
the master unit (102) reads the identification code (ID) from the portable information communication terminal (32) and transmits the identification code (ID) with a service request to the computer system (20, 24); and
the computer system (20, 24) receiving the identification code (ID) of the portable information communication terminal and the service request from the master unit, and transmitting a service corresponding to the service request as a wireless signal to the portable information communication terminal via a wireless communication network (28);
the system **characterised in that**:
the wireless communication network (28) is unidirectional; and
the portable information communication terminal (32) receives the wireless signal as the service corresponding to the service request from the wireless unidirectional communication network (28), not through the master unit(102).

10. A data communication network system according to claim 9, in which the computer system transmits the identification code, together with the service corresponding to the service request, as a wireless signal to the portable information communication terminal.

11. A data communication network system according to claim 9, in which:
the computer system (20, 24) sends the identification code (ID) and the service corresponding to the service request via a wireless link (30) comprising the wireless unidirectional communication network (28) to the portable information communication terminal (32); and
only the portable information communication terminal (32) that agrees with the identification code (ID) can obtain the service corresponding to the service request.

12. A data communication network system according to claim 9, in which the master unit (102) transmits a service request to the computer system (20, 24), together with the identification code (ID) for identifying the portable information communication terminal (32) to which the service corresponding to the service request should be sent.

13. A portable information communication terminal comprising:
a wireless signal receiver (220);
a communication block (236, 238) for communication with a master unit (102); and
a storage unit (222) for storing an inherent identification code (ID);
the arrangement being such that when the inherent identification code is transmitted to the master unit, the master unit transmits the inherent identification code and a service request via a communication network (16) to a computer system (20, 24), and the computer system transmits a service corresponding to the service request as a wireless signal via a wireless communication network (28) to the wireless signal receiver;
the terminal **characterised in that**:
the portable information communication terminal (32) receives the wireless signal as the service corresponding to the service request from the wireless communication network (28), not through the master unit (102), the wireless communication network (28) being unidirectional.

14. A portable information communication terminal according to claim 13, in which the computer system transmits the inherent identification code, together with the service corresponding to the service request, as a wireless signal to the wireless signal receiver.

15. A portable information communication terminal according to claim 13, in which:
the computer system (20, 24) sends the identification code (ID) and the service corresponding to the service request via a wireless link (30) comprising the wireless unidirectional communication network (28) to the portable information communication terminal (32); and
only the portable information communication terminal (32) that agrees with the identification code (ID) can obtain the service corresponding to the service request.

16. A portable information communication terminal according to claim 13, in which the master unit (102) transmits a service request to the computer system (20, 24), together with the identification code (ID) for identifying the portable information communication terminal (32) to which the service corresponding to the service request should be sent.

## Patentansprüche

1. Unterhaltungssystem, welches aufweist:
eine Haupteinheit (102), die mit einem Kommunikationsnetzwerk (16) verbunden ist; und
ein tragbares Informationskommunikationsendgerät (32), welches mit der Haupteinheit (102) verbunden ist und in der Lage ist, ein Drahtlossignal von einer externen Quelle über ein Drahtloskommunikationsnetzwerk zu empfangen, welches im Betrieb mit einem Computersystem (20, 24) verbunden ist, um somit eine Netzwerkanordnung zu bilden; wobei
die Haupteinheit (102) den Identifikationscode (ID) vom tragbaren Informationskommunikationsendgerät (32) liest; und die Netzwerkanordnung derart ist, dass, wenn der Identifikationscode (ID) des tragbaren Informationskommunikationsendgeräts (32) und eine Dienstanforderung von der Haupteinheit (102) über das Kommunikationsnetzwerk (16) zum Computersystem (20, 24) übertragen werden, das Computersystem (20, 24) einen Dienst entsprechend der Dienstanforderung als ein Drahtlossignal zum tragbaren Informationskommunikationsendgerät (32) überträgt;
das System **dadurch gekennzeichnet ist, dass**
das Drahtloskommunikationsnetzwerk (28) unidirektional ist; und das tragbare Informationskommunikationsendgerät (32) das Drahtlossignal als den Dienst entsprechend der Dienstanforderung vom unidirektionalen Drahtloskommunikationsnetzwerk (28) und nicht über die Haupteinheit (102) empfängt.

2. Unterhaltungssystem nach Anspruch 1, bei dem das Computersystem den Identifikationscode zusammen mit dem Dienst entsprechend der Dienstanforderung als Drahtlossignal zum tragbaren Informationskommunikationsendgerät überträgt.

3. Unterhaltungssystem nach Anspruch 1, wobei:
das Computersystem (20, 24) den Identifikationscode (ID) und den Dienst entsprechend der Dienstanforderung über eine Drahtlosverknüpfung (30), welche das unidirektionale Drahtloskommunikationsnetzwerk (28) aufweist, zum tragbaren Informationskommunikationsendgerät (32) sendet; und
lediglich das tragbare Informationskommunikationsendgerät (32), welches mit dem Identifikationscode (ID) übereinstimmt, den Dienst entsprechend der Dienstanforderung erlangen kann.

4. Unterhaltungssystem nach Anspruch 1, bei dem die Haupteinheit (102) eine Dienstanforderung zum Computersystem (20, 24) zusammen mit dem Identifikationscode (ID) zum Identifizieren des tragbaren Informationskommunikationsendgeräts (32) überträgt, zu welchem der Dienst entsprechend der Dienstanforderung gesendet werden sollte.

5. Verfahren zur Kommunikation von Daten über ein DatenkommunikationsNetzwerksystem, wobei das System ein Unterhaltungssystem aufweist, welches eine Haupteinheit (102) hat, welche mit einem Kommunikationsnetzwerk (16) verbunden ist, und ein tragbares Informationskommunikationsendgerät (32), welches mit der Haupteinheit (102) verbunden ist und in der Lage ist, ein Drahtlossignal von einer externen Quelle über ein Drahtloskommunikationsnetzwerk (28) zu empfangen; und
das Verfahren folgenden Schritt aufweist:
Lesen des Identifikationscodes (ID) vom tragbaren Informationskommunikationsendgerät (32); und Übertragen des Identifikationscodes (ID) des tragbaren Informationskommunikationsendgeräts (32) und einer Dienstanforderung von der Haupteinheit (102) über das Kommunikationsnetzwerk (16) zu einem Computersystem (20, 24), um zu veranlassen, dass das Computersystem (20, 24) einen Dienst entsprechend einer Dienstanforderung als ein Drahtlossignal zum tragbaren Informationskommunikationsendgerät (32) überträgt;
wobei das Verfahren durch folgende Schritte **gekennzeichnet** ist:
Empfangen des Drahtlossignals im tragbaren Informationskommunikationsendgerät (32) als den Dienst entsprechend der Dienstanforderung vom Drahtloskommunikationsnetzwerk (28) und nicht über die Haupteinheit (102), wobei das Drahtloskommunikationsnetzwerk unidirektional ist.

6. Verfahren nach Anspruch 5, welches folgenden Schritt aufweist:
Verwenden des Computersystems, um den Identifikationscode zusammen mit dem Dienst entsprechend der Dienstanforderung als ein Drahtlossignal zum tragbaren Informationskommunikationsendgerät zu übertragen.

7. Verfahren nach Anspruch 5, welches folgenden Schritt aufweist:
Verwenden des Computersystems (20, 24), um den Identifikationscode (ID) und den Dienst entsprechend der Dienstanforderung über eine Drahtlosverknüpfung (30), welche das unidirektionale Drahtloskommunikationsnetzwerk (28) umfasst, zum tragbaren Informationskommunikationsendgerät (32) zu senden, so das lediglich das tragbare Informationskommunikationsendgerät (32), welches mit dem Identifikationscode (ID) übereinstimmt, den Dienst entsprechend der Dienstanforderung erlangen kann.

8. Verfahren nach Anspruch 5, welches folgenden Schritt aufweist:
Verwenden der Haupteinheit (102), um eine Dienstanforderung zum Computersystem (20, 24) zusammen mit dem Identifikationscode (ID) zu übertragen, um das tragbare Informationskommunikationsendgerät (32), zu dem der Dienst entsprechend der Dienstanforderung gesendet werden sollte, zu identifizieren.

9. Datenkommunikationsnetzwerksystem, welches aufweist:
ein Unterhaltungssystem, welches eine Haupteinheit (102) hat, welche mit einem Kommunikationsnetzwerk (16) verbunden ist, und ein tragbares Informationskommunikationsendgerät (32), welches mit der Haupteinheit verbunden ist und in der Lage ist, ein Drahtlossignal von einer externen Quelle zu empfangen;
wobei die Haupteinheit (102) den Identifikationscode (ID) vom tragbaren Informationskommunikationsendgerät (32) liest und den Identifikationscode (ID) mit einer Dienstanforderung zum Computersystem (20, 24) überträgt; und das Computersystem (20, 24) den Identifikationscode (ID) des tragbaren Informationskommunikationsendgeräts und die Dienstanforderung von der Haupteinheit empfängt und einen Dienst entsprechend der Dienstanforderung als Drahtlossignal zum tragbaren Informationskommunikationsendgerät über ein Drahtloskommunikationsnetzwerk (28) überträgt;
wobei das System **dadurch gekennzeichnet ist, dass**:
das Drahtloskommunikationsnetzwerk (28) unidirektional ist; und das tragbare Informationskommunikationsendgerät (32) das Drahtlossignal als den Dienst entsprechend der Dienstanforderung vom unidirektionalen Drahtloskommunikationsnetzwerk (28) und nicht über die Haupteinheit (102) empfängt.

10. Datenkommunikationsnetzwerksystem nach Anspruch 9, bei dem das Computersystem den Identifikationscode zusammen mit dem Dienst entsprechend der Dienstanforderung als ein Drahtlossignal zum tragbaren Informationskommunikationsendgerät überträgt.

11. Datenkommunikationsnetzwerksystem nach Anspruch 9, wobei:
das Computersystem (20, 24) den Identifikationscode (ID) und den Dienst entsprechend der Dienstanforderung über eine Drahtlosverknüpfung (30), die das unidirektionale Drahtloskommunikationsnetzwerks (28) umfasst, zum tragbaren Informationskommunikationsendgerät (32) sendet; und
lediglich das tragbare Informationskommunikationsendgerät (32), welches mit dem Identifikationscode (ID) übereinstimmt, den Dienst entsprechend der Dienstanforderung erlangen kann.

12. Datenkommunikationsnetzwerksystem nach Anspruch 9, wobei die Haupteinheit (102) eine Dienstanforderung zum Computersystem (20, 24) zusammen dem Identifikationscode (ID) überträgt, um das tragbare Informationskommunikationsendgerät (32), zu welchem der Dienst entsprechend der Dienstanforderung gesendet werden sollte, zu identifizieren.

13. Tragbares Informationskommunikationsendgerät, welches aufweist:
einen Drahtlossignalempfänger (220);
einen Kommunikationsblock (236, 238) zur Kommunikation mit einer Haupteinheit (102); und
eine Speichereinheit (222) zum Speichern eines anhaftenden Identifikationscodes (ID);
wobei die Anordnung derart ist, dass, wenn der anhaftende Identifikationscode zur Haupteinheit übertragen wird, die Haupteinheit den anhaftenden Identifikationscode und eine Dienstanforderung über ein Kommunikationsnetzwerk (16) zu einem Computersystem (20, 24) überträgt und das Computersystem einen Dienst entsprechend der Dienstanforderung als ein Drahtlossignal über ein Drahtloskommunikationsnetzwerk (28) zum Drahtlossignalempfänger überträgt;
wobei das Endgerät **dadurch gekennzeichnet ist, dass**
das tragbare Informationskommunikationsendgerät (32) das Drahtlossignal als den Dienst entsprechend der Dienstanforderung vom Drahtloskommunikationsnetzwerk (28) und nicht über die Haupteinheit (102) empfängt, wobei das Drahtloskommunikationsnetzwerk (28) unidirektional ist.

14. Tragbares Informationskommunikationsendgerät nach Anspruch 13, wobei das Computersystem den anhaftenden Identifikationscode zusammen mit dem Dienst, der der Dienstanforderung entspricht, als ein Drahtlossignal zum Drahtlossignalempfänger überträgt.

15. Tragbares Informationskommunikationsendgerät nach Anspruch 13, wobei
das Computersystem (20, 24) den Identifikationscode (ID) und den Dienst, der der Dienstanforderung entspricht, über eine Drahtlosverknüpfung (30), welche das unidirektionale Drahtloskommunikationsnetzwerk (28) umfasst, zum tragbaren Informationskommunikationsendgerät (32) sendet; und
lediglich das tragbare Informationskommunikationsendgerät (32), welches mit dem Identifikationscode (ID) übereinstimmt, den Dienst entsprechend der Dienstanforderung erlangen kann.

16. Tragbares Informationskommunikationsendgerät nach Anspruch 13, wobei die Haupteinheit (102) eine Dienstanforderung zum Computersystem (20, 24) zusammen dem Identifikationscode (ID) überträgt, um das tragbare Informationskommunikationsendgerät (32) zu identifizieren, zu welchem der Dienst entsprechend der Dienstanforderung gesendet werden sollte.

## Revendications

1. Système de divertissement comprenant :
une unité principale (102) reliée à un réseau de communication (16) ; et
un terminal de communication d'informations portable (32) relié à l'unité principale (102) et capable de recevoir un signal sans fil de la part d'une source externe via un réseau de communication sans fil relié de manière opérationnelle à un système informatique (20, 24) de façon à former un ensemble de réseau;
dans lequel :
l'unité principale (102) lit le code d'identification (ID) provenant du terminal de communication d'informations portable (32) ; et
l'ensemble de réseau est tel que, lorsque le code d'identification (ID) du terminal de communication d'informations portable (32) et une demande de service sont transmis par l'unité principale (102) via le réseau de communication (16) au système informatique (20, 24), le système informatique (20, 24) transmet un service correspondant à la demande de service, en tant que signal sans fil, au terminal de communication d'informations portable (32) ;
le système étant **caractérisé en ce que** :
le réseau de communication sans fil (28) est unidirectionnel ; et
le terminal de communication d'informations portable (32) reçoit le signal sans fil en tant que service correspondant à la demande de service de la part du réseau de communication unidirectionnel sans fil (28), et non pas par l'unité principale (102).

2. Système de divertissement selon la revendication 1, dans lequel le système informatique transmet le code d'identification, avec le service correspondant à la demande de service, en tant que signal sans fil au terminal de communication d'informations portable.

3. Système de divertissement selon la revendication 1, dans lequel :
le système informatique (20, 24) envoie le code d'identification (ID) et le service correspondant à la demande de service via une liaison sans fil (30) comprenant le réseau de communication unidirectionnel sans fil (28) au terminal de communication d'informations portable (32) ; et
seul le terminal de communication d'informations portable (32) qui correspond au code d'identification (ID) peut obtenir le service correspondant à la demande de service.

4. Système de divertissement selon la revendication 1, dans lequel l'unité principale (102) transmet une demande de service au système informatique (20, 24), avec le code d'identification (ID) destiné à identifier le terminal de communication d'informations portable (32) auquel le service correspondant à la demande de service doit être envoyé.

5. Procédé de communication de données sur un système réseau de communication de données, le système comprenant un système de divertissement ayant une unité principale (102) reliée à un réseau de communication (16) et un terminal de communication d'informations portable (32) relié à l'unité principale (102) et capable de recevoir un signal sans fil de la part d'une source externe via un réseau de communication sans fil (28) ; et
le procédé comprenant l'étape consistant à :
lire le code d'identification (ID) provenant du terminal de communication d'informations portable (32) ; et
transmettre le code d'identification (ID) du terminal de communication d'informations portable (32) et une demande de service provenant de l'unité principale (102) via le réseau de communication (16) à un système informatique (20, 24) provoquant le fait que le système informatique (20, 24) transmette un service correspondant à une demande de service, en tant que signal sans fil, au terminal de communication d'informations portable (32) ;
dans lequel le procédé est **caractérisé par** les étapes consistant à :
recevoir le signal sans fil au niveau du terminal de communication d'informations portable (32) en tant que service correspondant à la demande de service provenant du réseau de communication sans fil (28), et non pas par l'unité principale (102), le réseau de communication sans fil étant unidirectionnel.

6. Procédé selon la revendication 5, comprenant l'étape consistant à :
utiliser le système informatique afin de transmettre le code d'identification avec le service correspondant à la demande de service, en tant que signal sans fil, au terminal de communication d'informations portable.

7. Procédé selon la revendication 5, comprenant l'étape consistant à :
utiliser le système informatique (20, 24) afin d'envoyer le code d'identification (ID) et le service correspondant à la demande de service via une liaison sans fil (30) comprenant le réseau de communication unidirectionnel sans fil (28) au terminal de communication d'informations portable (32) de telle sorte que seul le terminal de communication d'informations portable (32) qui correspond au code d'identification (ID) puisse obtenir le service correspondant à la demande de service.

8. Procédé selon la revendication 5, comprenant l'étape consistant à :
utiliser l'unité principale (102) afin de transmettre une demande de service au système informatique (20, 24), avec le code d'identification (ID) destiné à identifier le terminal de communication d'informations portable (32) auquel le service correspondant à la demande de service doit être envoyé.

9. Système réseau de communication de données comprenant :
un système de divertissement ayant une unité principale (102) reliée à un réseau de communication (16), et un terminal de communication d'informations portable (32) relié à l'unité principale et capable de recevoir un signal sans fil de la part d'une source externe ;
l'unité principale (102) lit le code d'identification (ID) provenant du terminal de communication d'informations portable (32) et transmet le code d'identification (ID) avec une demande de service au système informatique (20, 24) ; et
le système informatique (20, 24) recevant le code d'identification (ID) du terminal de communication d'informations portable et la demande de service provenant de l'unité principale, et transmettant un service correspondant à la demande de service, en tant que signal sans fil, au terminal de communication d'informations portable via un réseau de communication sans fil (28);
le système étant **caractérisé en ce que** :
le réseau de communication sans fil (28) est unidirectionnel ; et
le terminal de communication d'informations portable (32) reçoit le signal sans fil en tant que service correspondant à la demande de service de la part du réseau de communication unidirectionnel sans fil (28), et non pas par l'unité principale (102).

10. Système réseau de communication de données selon la revendication 9, dans lequel le système informatique transmet le code d'identification, avec le service correspondant à la demande de service, en tant que signal sans fil au terminal de communication d'informations portable.

11. Système réseau de communication de données selon la revendication 9, dans lequel :
le système informatique (20, 24) envoie le code d'identification (ID) et le service correspondant à la demande de service via une liaison sans fil (30) comprenant le réseau de communication unidirectionnel sans fil (28) au terminal de communication d'informations portable (32) ; et
seul le terminal de communication d'informations portable (32) qui correspond au code d'identification (ID) peut obtenir le service correspondant à la demande de service.

12. Système réseau de communication de données selon la revendication 9, dans lequel l'unité principale (102) transmet une demande de service au système informatique (20, 24) avec le code d'identification (ID) destiné à identifier le terminal de communication d'informations portable (32) auquel le service correspondant à la demande de service doit être envoyé.

13. Terminal de communication d'informations portable comprenant :
un récepteur de signal sans fil (220);
un bloc de communication (236, 238) destiné à une communication avec une unité principale (102); et
une unité de stockage (222) destinée à stocker un code d'identification inhérent (ID) ;
l'agencement étant tel que, lorsque le code d'identification inhérent est transmis à l'unité principale, l'unité principale transmet le code d'identification inhérent et une demande de service via un réseau de communication (16) à un système informatique (20, 24), et le système informatique transmet un service correspondant à la demande de service, en tant que signal sans fil, via un réseau de communication sans fil (28), au récepteur de signal sans fil;
le terminal étant **caractérisé en ce que** :
le terminal de communications d'informations portable (32) reçoit le signal sans fil en tant que service correspondant à la demande de service de la part du réseau de communication sans fil (28), et non pas par l'unité principale (102), le réseau de communication sans fil (28) étant unidirectionnel.

14. Terminal de communication d'informations portable selon la revendication 13, dans lequel le système informatique transmet le code d'identification inhérent, avec le service correspondant à la demande de service, en tant que signal sans fil, au récepteur de signal sans fil.

15. Terminal de communication d'informations portable selon la revendication 13, dans lequel :
le système informatique (20, 24) envoie le code d'identification (ID) et le service correspondant à la demande de service, via une liaison sans fil (30) comprenant le réseau de communication unidirectionnel sans fil (28), au terminal de communication d'informations portable (32) ; et
seul le terminal de communication d'informations portable (32) qui correspond au code d'identification (ID) peut obtenir le service correspondant à la demande de service.

16. Terminal de communication d'informations portable selon la revendication 13, dans lequel l'unité principale (102) transmet une demande de service au système informatique (20, 24), avec le code d'identification (ID) destiné à identifier le terminal de communication d'informations portable (32) auquel le service correspondant à la demande de service doit être envoyé.
